# EUROPEAN PATENT APPLICATION

(11) **EP 4 841 075 A1**
(43) Date of publication of application: **18.11.2026**
(21) Application number: 26173143.4
(22) Date of filing: 17.04.2026
(51) Int. Cl.: F01D 25/24, F01D 21/04, F01D 21/08, F01D 25/16

(54) **SNAP-THROUGH BUCKLING BEARING SUPPORT FOR GAS TURBINE FAN**

(30) Priority: 17.04.2025 US 202519182017
(71) Applicant: Pratt & Whitney Canada Corp., Longueuil, Québec J4G 1A1 (CA)
(72) Inventor: TOMES, Nathan, (01BE5) Longueuil, J4G 1A1 (CA); RICHARDSON, Tyler, (01BE5) Longueuil, J4G 1A1 (CA)
(74) Representative: Dehns

(57) **Abstract**

A snap-through buckling bearing support assembly (401) is provided for mitigating imbalance in an engine (10) due to a fan blade off (FBO) event. The snap-through buckling bearing support assembly (401) includes an annular flange (420) fixed to a casing (410) of the engine (10), spokes (430) extending radially inwardly from the annular flange (420), an annular bearing element (440) and a buckling membrane (460). The buckling membrane (460) is attached to respective interior ends (431) of each of the spokes (430) to radially restrain the annular bearing element (440) against loading up to a designed buckling load, which is less than or equal to loading of the FBO event, and to buckle under loading beyond the designed buckling load.

## Description

### BACKGROUND

The present disclosure relates to aircraft gas turbine engines and, in particular, to a snap-through buckling bearing support of a gas turbine engine of an aircraft.

Aircraft engine fans are designed to resist damage caused by foreign object ingestion. However, in certain circumstances, a fan may be damaged to such an extent that parts of one or more of the fan blades become detached from the rotor disk (referred to herein as a fan blade off event or FBO event). This may result in a significant imbalance requiring shutdown of the engine to minimize load transmission to the aircraft. The imbalance in the fan created by the blade loss generates extremely high radial loads which must at least be partially absorbed as the engine is run down to windmilling speed (i.e., the speed at which the rotor spins in a non-operative condition as a result of the aircraft moving through the air).

Under certain circumstances, the vibration resulting from the fan imbalance at windmilling speed can still be considerable. If not appropriately controlled, these vibrations may damage the engine structure and the aircraft and present control difficulties.

### SUMMARY

According to an aspect of the disclosure, a snap-through buckling bearing support assembly is provided for mitigating imbalance in an engine due to a fan blade off (FBO) event. The snap-through buckling bearing support assembly includes an annular flange fixed to a casing of the engine, spokes extending radially inwardly from the annular flange, an annular bearing element and a buckling membrane. The buckling membrane is attached to respective interior ends of each of the spokes to radially restrain the annular bearing element against loading up to a designed buckling load, which is less than or equal to loading of the FBO event, and to buckle under loading beyond the designed buckling load.

In a further embodiment of the previous embodiment, following buckling of the buckling membrane, the buckling membrane remains buckled and the spokes act as bumpers for radially restraining the annular bearing element.

In a further embodiment of any of the previous embodiments, the buckling membrane includes metallic material.

In a further embodiment of any of the previous embodiments, the buckling membrane includes discrete segments between neighboring spokes, each discrete segment being curved radially inwardly for loading up to the designed buckling load.

In a further embodiment of any of the previous embodiments, respective ends of each of the discrete segments are connected to an interior end of a corresponding spoke at a pin joint.

In a further embodiment of any of the previous embodiments, respective ends of each of the discrete segments are welded to an interior end of a corresponding spoke.

In a further embodiment of any of the previous embodiments, the annular bearing element includes a radially outwardly extending flange, each of the spokes includes forward and aft spokes to axially restrain the radially outwardly extending flange, and the buckling membrane includes a forward buckling membrane attached to the respective interior ends of each of the forward spokes and an aft buckling membrane attached to the respective interior ends of each of the aft spokes.

In a further embodiment of any of the previous embodiments, the forward and aft spokes have alternating spoke attachment points.

According to an aspect of the disclosure, a snap-through buckling bearing support assembly is provided for mitigating imbalance in an engine due to a fan blade off (FBO) event. The snap-through buckling bearing support assembly includes an annular flange fixed to a casing of the engine, an annular bearing element and a buckling double membrane attached to an interior surface of the annular flange to radially restrain the annular bearing element against loading up to a designed buckling load, which is less than or equal to loading of the FBO event, and to buckle under loading beyond the designed buckling load.

In a further embodiment of any of the previous embodiments, an anti-rotation feature prevents relative rotation between the annular flange and the buckling double membrane.

In a further embodiment of any of the previous embodiments, following buckling of the buckling double membrane, the buckling double membrane remains buckled.

In a further embodiment of any of the previous embodiments, the buckling double membrane includes metallic material.

In a further embodiment of any of the previous embodiments, the buckling double membrane includes an interior membrane including first contact points and first discrete segments between neighboring first contact points, each first discrete segment being curved radially inwardly for loading up to the designed buckling load and an exterior membrane including second contact points and second discrete segments between neighboring second contact points, each second discrete segment being curved radially outwardly and affixed to the interior surface of the annular flange, each first contact point being affixed to a corresponding one of the second contact points.

In a further embodiment of any of the previous embodiments, each second discrete segment is welded to the interior surface of the annular flange and each first contact point is welded to the corresponding one of the second contact points.

According to an aspect of the disclosure, a snap-through buckling bearing support assembly is provided for mitigating imbalance in an engine due to a fan blade off (FBO) event. The snap-through buckling bearing support assembly includes an annular flange fixed to a casing of the engine, an annular bearing element and a buckling single membrane attached to an interior surface of the annular flange to radially restrain the annular bearing element against loading up to a designed buckling load, which is less than or equal to loading of the FBO event, and to buckle under loading beyond the designed buckling load.

In a further embodiment of any of the previous embodiments, an anti-rotation feature prevents relative rotation between the annular flange and the buckling single membrane.

In a further embodiment of any of the previous embodiments, following buckling of the buckling single membrane, the buckling single membrane remains buckled.

In a further embodiment of any of the previous embodiments, the buckling single membrane includes metallic material.

In a further embodiment of any of the previous embodiments, the buckling single membrane includes contact points affixed to the interior surface of the annular flange and discrete segments between neighboring contact points, each discrete segment being curved radially inwardly for loading up to the designed buckling load.

In a further embodiment of any of the previous embodiments, each contact point is welded to the interior surface of the annular flange.

Additional features and advantages are realized through the techniques of the present disclosure. Other embodiments and aspects of the disclosure are described in detail herein and are considered a part of the claimed technical concept. For a better understanding of the disclosure with the advantages and the features, refer to the description and to the drawings.

### BRIEF DESCRIPTION OF THE DRAWINGS

For a more complete understanding of this disclosure, reference is now made to the following brief description, taken in connection with the accompanying drawings and detailed description, wherein like reference numerals represent like parts:
FIG. 1 is a cross-sectional view of a prior art turboshaft engine;
FIG. 2 is a side schematic diagram of a prior art bearing support assembly;
FIG. 3 is a graphical illustration of snap-through buckling in accordance with embodiments;
FIG. 4 is a side schematic diagram of a snap-through buckling bearing support assembly in accordance with embodiments;
FIGS. 5A-5C are graphical illustrations of operations of the snap-through buckling bearing support assembly of FIG. 4 in accordance with embodiments;
FIG. 6 is an enlarged view illustrating pin joints of the snap-through buckling bearing support assembly of FIG. 4 in accordance with embodiments;
FIG. 7 is an enlarged view illustrating welds of the snap-through buckling bearing support assembly of FIG. 4 in accordance with embodiments;
FIG. 8 is an enlarged side view of a snap-through buckling bearing support assembly with axial restraint in accordance with embodiments;
FIGS. 9A-9D are graphical illustrations of the snap-through buckling bearing support assembly with axial restraint of FIG. 8 in accordance with embodiments;
FIG. 10 is an axial schematic diagram of a snap-through buckling bearing support assembly with a buckling double membrane in accordance with embodiments; and
FIGS. 11A and 11B are axial schematic diagrams of a snap-through buckling bearing support assembly with a buckling single membrane in accordance with embodiments.

### DETAILED DESCRIPTION

The following disclosure is applicable to any type of gas turbine engine, including, but not limited to, turbofans, turboshafts, turboprops, turbojets, electrical drives, hybrid drives, etc. The gas turbine engine described below is provided by way of example, and should not be interpreted as limiting the scope of the application or the claims in any way.

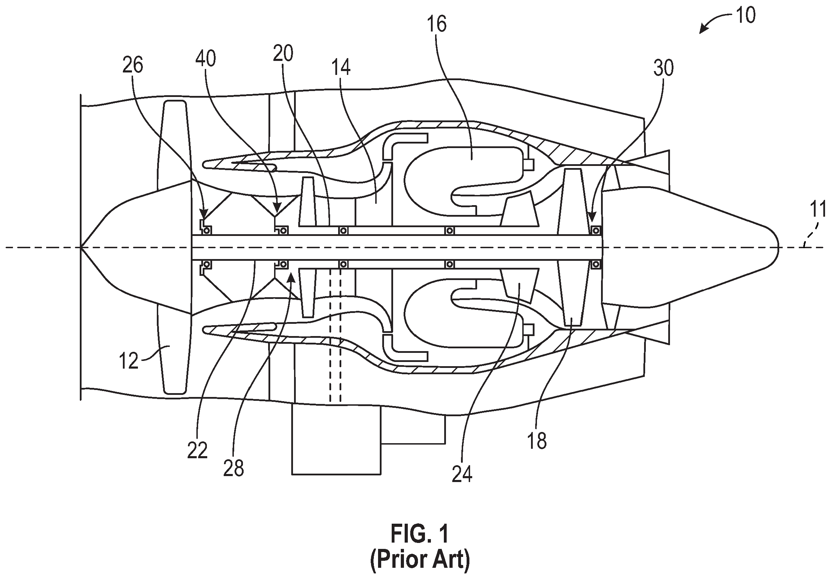

FIG. 1 illustrates a turbofan gas turbine engine 10 of a type provided for use in subsonic flight and generally including a low pressure spool assembly, which includes a fan assembly 12, a low pressure compressor assembly (not shown) and a low pressure turbine assembly 18 connected by a low pressure shaft 22, and a high pressure spool assembly, which includes a high pressure compressor assembly 14 and a high pressure turbine assembly 24 connected by a high pressure shaft 20. The engine 10 further includes a combustor 16 in which compressed air from the high pressure compressor 14 is mixed with fuel and ignited for generating an annular stream of hot combustion gases from which the low pressure and high pressure turbine sections extract energy.

The low pressure spool is rotatably supported by a number of axially spaced-apart bearings concentrically mounted about the central axis 11 of the engine 10. The low pressure shaft 22 is supported at its front or upstream end by first and second bearings 26 and 28 and at a rear end thereof by a third bearing 30. The bearing arrangement for a particular engine, including but not limited to the number and type of bearings selected, is typically determined by a number of factors specific to that engine. The bearing arrangement described herein is exemplary only, and not intended to be limiting. In this example, the first and third bearings 26 and 30 may be roller bearings for radially supporting the low pressure shaft 22 and the second bearing 28 may be a thrust bearing to provide both axial and radial support to the low pressure shaft 22. The first bearing 26 can be disposed adjacent the fan rotor and the second bearing 28 can be disposed adjacent to and downstream from the first bearing 26, and upstream of the high pressure compressor 14 relative to a flow direction of the gases through the engine 10. The bearings and supporting structure flanges may be arranged in any suitable fashion in the context of the present application.

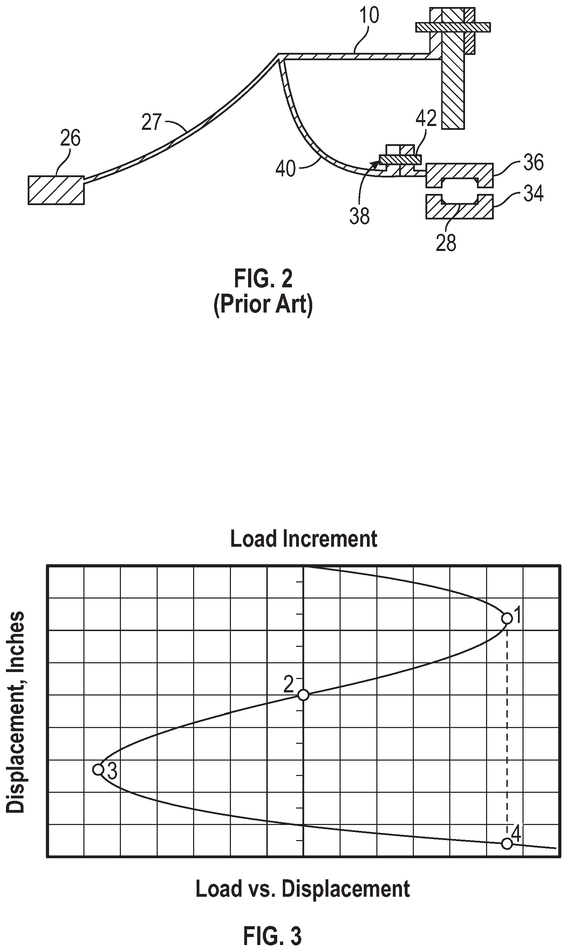

With reference to FIG. 2, the first bearing 26 can be supported on the stator structure of the engine 10 by a first bearing support 27. To minimize the effect of potentially damaging abnormal imbalance loads, such as those caused by FBO-induced imbalance loads, the first bearing support 27 can be designed to be frangible when subject to a predetermined critical load. As shown in FIG. 2, the first bearing support 27 may be provided in the form of a fusible conical structure connected to an outer race of the first bearing 26. The fusible conical structure fails when subject to a critical loading condition to thereby decouple the first bearing 26 from the stator structure of the engine 10. The fusible conical structure decouples the first bearing 26 from the static structure of the engine 10 by buckling, collapsing, crimping, yielding or fracturing. The net result is that the radial support provided to the first bearing 26 is either eliminated or reduced to a negligible value. The second bearing 28 may be provided in the form of a thrust bearing having rolling elements retained by a bearing cage and disposed between inner and outer races 34, 36. The inner race 34 can be securely mounted to the low pressure shaft 22. The outer race 36 has a mounting flange 38 projecting radially outwardly from the front end thereof for connection to a second bearing support 40. The second bearing support 40 can have a frusto-conical shape. A series of circumferentially distributed frangible fasteners, such as fusible or shear bolts 42 or the like, may be used to fasten the mounting flange 38 of the outer race 36 to the bearing support 40. The fusible bolts 42 may shear for structurally decoupling the second bearing 28 from the stator structure of the engine 10, and are sized so that shear preferably occurs after decoupling at the first bearing 26, thereby preventing the transmission of potentially damaging imbalance forces or other vibratory forces to the engine 10 and the airframe in the event of a fan blade loss or another abnormal fan rotor imbalance event.

It is often the case that, during an FBO event, some engine architectures are designed to require that the first and second bearings 26 and 28 break to help prevent loads and vibrations caused by imbalances from being transferred from the rotor to the engine 10 and ultimately to the aircraft structure. It has been found, however, that designing the fusible or shear bolts 42 to always break at FBO (requiring high stress) but not yield at limit loads or installation and have a full lifespan (all requiring low stress) is difficult.

A need therefore exists for an engine architecture in which at least the second bearing support for the second bearing described above is broken due to buckling at stresses below yield.

Thus, as will be described below, a snap-through buckling-based frangible bearing support is provided for use in an engine of an aircraft. The snap-through buckling-based frangible bearing support is characterized in that a buckling capacity thereof is designed to be greater than ultimate maneuver loads but less than those experienced during FBO. If desirable, the buckling capacity can be set such that collapse only occurs under rundown when a fan resonance occurs that increases the radial forces beyond those during the initial containment event. The post-buckled shape of the snap-through buckling-based frangible bearing support can act as a bumper for the bearing without need for additional parts. In the snap-through buckling-based frangible bearing support, buckling members are not connected at the center ring to ensure that the member is only under compression and not tension, buckling membranes are curved in or out of plane such that they form an optional 'blister' shape or another similar type of shape and points at which the buckling members meet spokes and each other are designed in some cases to act as a pinned joint, allowing relative rotation either through soft connections or through plastic deformation. In some configurations, the snap-through buckling-based frangible bearing support provides sufficiently stiff axial support for rotor stability. For configurations where the frangible support does not provide sufficient axial stiffness, a secondary support provides the necessary axial support and is configured such that it does not carry significant radial loading. This secondary support can, but is not required to, have a shared load path with the first bearing support.

With reference to FIG. 3, snap-through buckling is a phenomenon where a structure has two or more equilibrium states at a given force (see the arrow in FIG. 3A). In the initial loading region (up to point 1 in FIG. 3B), load-displacement is linear. Once the first limit point is passed, the structural resistance force drops below the applied force and the system 'snaps' through to the next equilibrium state (from point 1, through point 2 and to point 3 in FIG. 3B). Thereafter, structural resistance forces increase again due to the yield strength of the structures being loaded (up to point 4 and beyond in FIG. 3B). For the snap-through buckling-based frangible bearing support described herein, a geometry thereof will be selected such that structures will remain in a post-buckled state when the buckling force is removed.

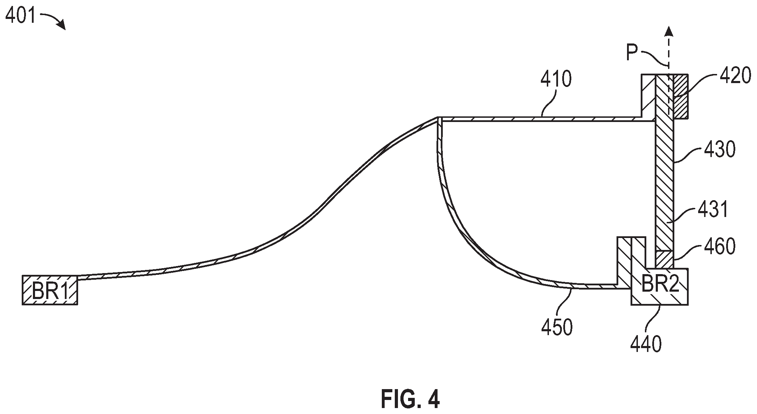

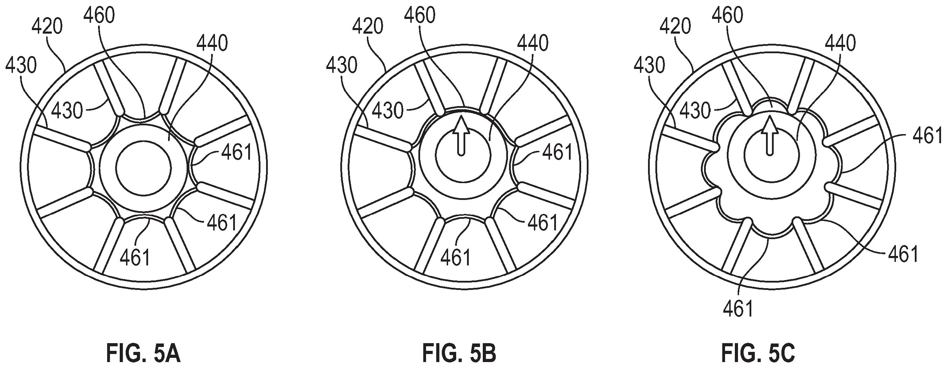

With reference to FIG. 4 and FIGS. 5A-5C, a snap-through buckling bearing support assembly 401 is provided for mitigating imbalance in an engine, such as the engine 10 of FIGS. 1 and 2, due to an FBO event. The snap-through buckling bearing support assembly 401 includes a casing 410, such as an engine casing, an annular flange 420 that is fixed to the casing 410, spokes 430 that extend radially inwardly from the annular flange 420, an annular bearing element 440, such as an outer race of a bearing (i.e., the second bearing 28 of FIG. 1), an axial restraint 450 and a buckling membrane 460. The spokes 430 are generally arranged in a plane P. The axial restraint 450 is attached at opposite ends thereof to the casing 410 and to the annular bearing element 440 and is configured to axially restrain the annular bearing element 440 relative to the plane P of the spokes 430. The buckling membrane 460 is attached to respective interior ends 431 of each of the spokes 430. The buckling membrane 460 is configured to radially restrain the annular bearing element 440 against loading up to a designed buckling load, which is designed to be less than or equal to loading of the FBO event, and to buckle under loading beyond the designed buckling load.

The buckling membrane 460 can include metallic material or some other suitable material and can include discrete segments 461 (see FIG. 5A) between neighboring spokes 430. Each discrete segment 461 is curved radially inwardly for loading up to the designed buckling load.

An operation of the buckling membrane 460 is illustrated in FIGS. 5A-5C. As shown in FIG. 5A, during normal engine operations, the annular bearing element 440 is radially restrained by the discrete segments 461 as long as the annular bearing element 440 exerts forces on the discrete segments 461 that are less than the designed buckling load. As shown in FIG. 5B, the annular bearing element 440 exerts a force that is at least equal to the designed buckling load on one of the discrete segments 461 in accordance with an FBO event. This force causes the one discrete segment 461 to buckle, snapping through to its second stable shape, curving radially outwardly, whereupon the annular bearing element 440 becomes offset and the corresponding spokes 430 serve as bumpers for radially restraining the annular bearing element 440. As shown in FIG. 5C, engine rotation continues and the offset annular bearing element 440 causes each of the discrete segments 461 to buckle in sequence. Once each discrete segment 461 buckles as shown in FIGS. 5B and 5C, the discrete segments 461 remain buckled and the spokes 430 serve as bumpers for radially restraining the annular bearing element 440.

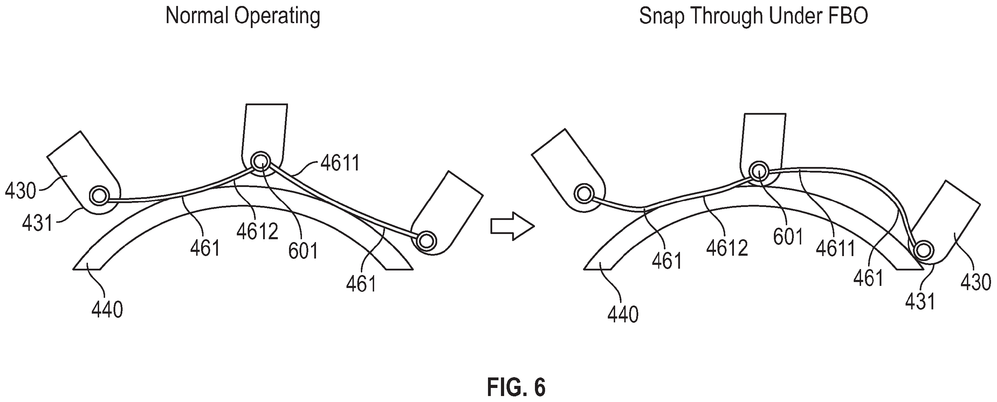

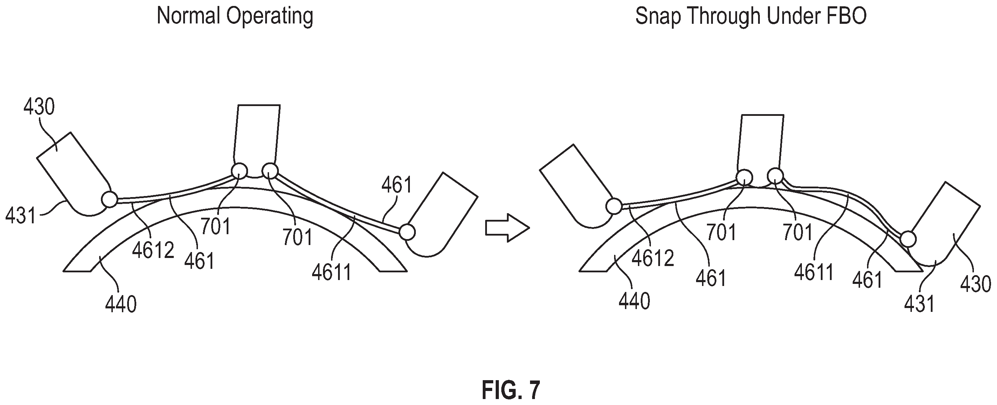

With continued reference to FIG. 4 and FIGS. 5A-5C and with additional reference to FIGS. 6 and 7, respective ends 4611, 4612 of each of the discrete segments 461 can be connected to the interior end 431 of the corresponding spoke 430 at a pin joint 601 (see FIG. 6) and/or the respective ends 4611, 4612 of each of the discrete segments 461 can be welded to the interior end 431 of the corresponding spoke 430 to form a weld 701 (see FIG. 7). In the case of the respective ends 4611, 4612 of each of the discrete segments 461 being connected to the interior end 431 of the corresponding spoke 430 at the pin joint 601 of FIG. 6, overlapped curved ones of the discrete segments 461 can be connected by the pin joint 601 at each spoke 430 and permit local rotation and ultimately snap-through of the discrete segments 461. Thus, a substantial entirety of the discrete segment 461 can buckle. In the case of the respective ends 4611, 4612 of each of the discrete segments 461 being welded to the interior end 431 of the corresponding spoke 430 to form the weld 701 of FIG. 7, the welds 701 do not permit local rotation leading to plastic deformation of the discrete segments near the welds 701. Thus, in these or other cases, a partial length of the discrete segment 461 can plastically deform and buckle.

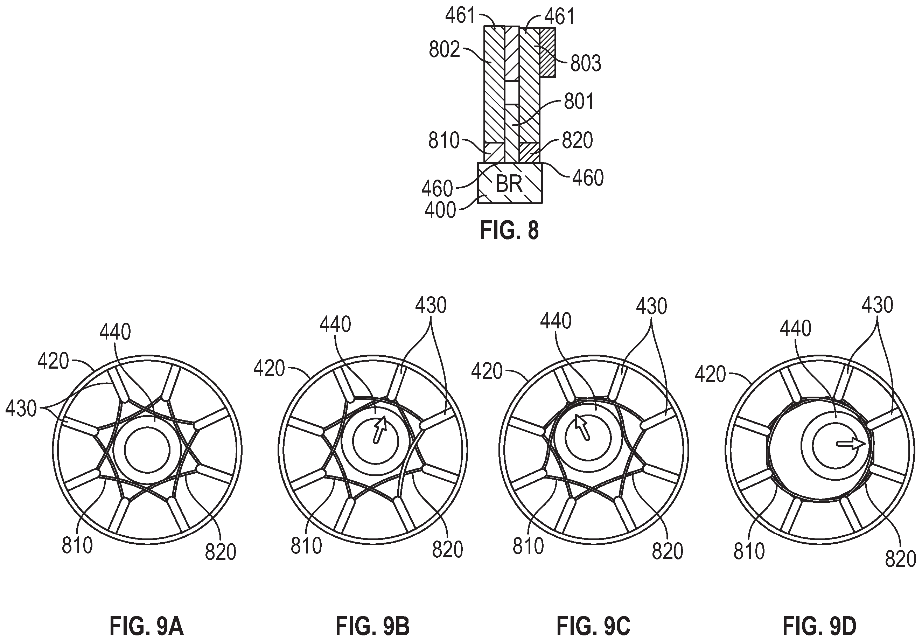

With continued reference to FIG. 4 and FIGS. 5A-5C and with additional reference to FIG. 8 and FIGS. 9A-9D, the axial restraint 450 of FIG. 4 may not be provided or available. In these or other cases, the annular bearing element 440 can include a radially outwardly extending flange 801, and each of the spokes 461 can include or be provided as a forward spoke 802 and an aft spoke 803 where the forward and aft spokes 802 and 803 serve to axially restrain the radially outwardly extending flange 801 and the annular bearing element 440 as a whole to at least a limited extent for use with roller bearings in particular. In these or other cases, the buckling membrane 460 can include or be provided as a forward buckling membrane 810, which is attached to the respective interior ends of each of the forward spokes 802, and an aft buckling membrane 820, which is attached to the respective interior ends of each of the aft spokes 803. As shown in FIGS. 9A-9D, the forward and aft spokes 802 and 803 can have alternating spoke attachment points. This can allow for shallower snap-through buckling membrane 460 arcs while retaining significant displacement, opening the design space to larger combinations of initial stiffness, effective bumper radial position, snap-through force, etc.

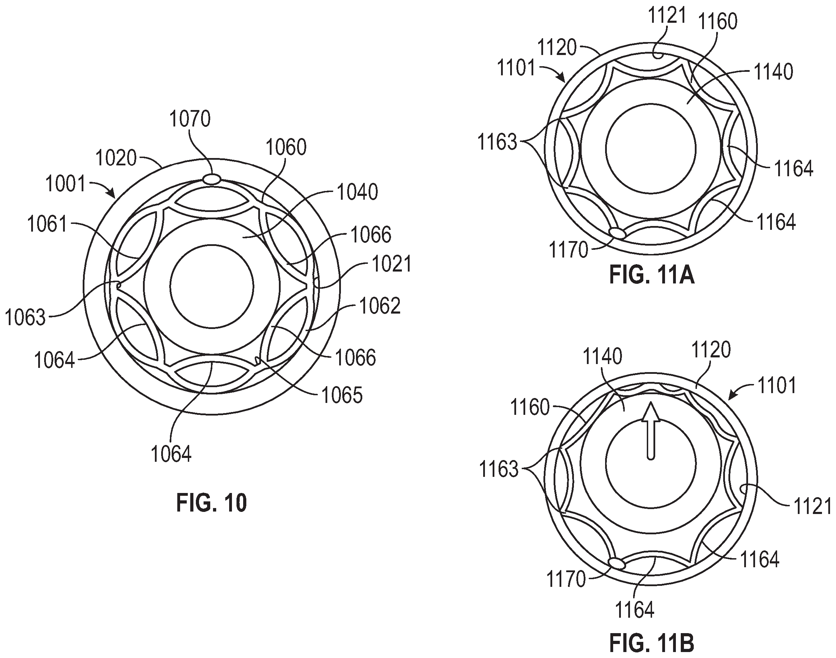

With reference to FIG. 10, a snap-through buckling bearing support assembly 1001 is provided for mitigating imbalance in an engine, such as the engine 10 of FIGS. 1 and 2, due to an FBO event. The snap-through buckling bearing support assembly 1001 includes a casing, such as an engine casing (see, e.g., the casing 410 of FIG. 4), an annular flange 1020 that is fixed to the casing, an annular bearing element 1040, such as an outer race of a bearing (i.e., the second bearing 28 of FIG. 1), an optional axial restraint (see the axial restraint 450 of FIG. 4), a buckling double membrane 1060 and one or more anti-rotation features 1070. As above, the axial restraint is attached at opposite ends thereof to the casing and to the annular bearing element 1040 and is configured to axially restrain the annular bearing element 1040 relative to a plane of the annular flange 1020. The buckling double membrane 1060 is attached to an interior surface 1021 of the annular flange 1020. The buckling double membrane 1060 is configured to radially restrain the annular bearing element 1040 against loading up to a designed buckling load, which is designed to be less than or equal to loading of the FBO event, and to buckle under loading beyond the designed buckling load. The one or more anti-rotation features 1070 prevent relative rotation between the annular flange 1020 and the buckling double membrane 1060.

The buckling double membrane 1060 can include metallic material or some other suitable material and can include an interior membrane 1061 and an exterior membrane 1062. The interior membrane 1061 includes first contact points 1063 and first discrete segments 1064 between neighboring first contact points 1063. Each first discrete segment 1064 can be curved radially inwardly for loading up to the designed buckling load and for buckling due to loading at or above the designed buckling load. The exterior membrane 1062 includes second contact points 1065 and second discrete segments 1066 between neighboring second contact points 1065. Each second discrete segment 1066 can be curved radially outwardly and affixed to the interior surface 1021 of the annular flange 1020. Each first contact point 1063 can be affixed to a corresponding one of the second contact points 1065. In accordance with embodiments, each second discrete segment 1066 can be welded to the interior surface 1021 of the annular flange 1020 and each first contact point 1063 can be welded to the corresponding one of the second contact points 1065. Following buckling of the first discrete segments 1064 of the buckling double membrane 1060, the buckling double membrane 1060 remains buckled.

As shown in FIG. 10, radii of the second discrete segments 1066 are larger than those of the first discrete segments 1064 so that once the first discrete segments 1064 buckle (i.e., snap-through), the first discrete segments 1064 remain in that configuration. The result is a nonlinear stiffness with low stiffness, a 'snap' region of zero stiffness, medium stiffness before the first discrete segments 1064 are fully compressed and finally a high stiffness once sufficient radial deflection of the bearing race compacts the buckled double membrane.

With reference to FIGS. 11A and 11B, a snap-through buckling bearing support assembly 1101 is provided for mitigating imbalance in an engine, such as the engine 10 of FIGS. 1 and 2, due to an FBO event. The snap-through buckling bearing support assembly 1101 includes a casing, such as an engine casing (see, e.g., the casing 410 of FIG. 4), an annular flange 1120 that is fixed to the casing, an annular bearing element 1140, such as an outer race of a bearing (i.e., the second bearing 28 of FIG. 1), an optional axial restraint (see the axial restraint 450 of FIG. 4), a buckling single membrane 1160 and an optional anti-rotation feature 1170. As above, the axial restraint is attached at opposite ends thereof to the casing and to the annular bearing element 1140 and is configured to axially restrain the annular bearing element 1140 relative to a plane of the annular flange 1120. The buckling single membrane 1160 is attached to an interior surface 1121 of the annular flange 1120. The buckling single membrane 1160 is configured to radially restrain the annular bearing element 1140 against loading up to a designed buckling load, which is designed to be less than or equal to loading of the FBO event, and to buckle under loading beyond the designed buckling load. The optional anti-rotation feature 1170 prevents relative rotation between the annular flange 1120 and the buckling single membrane 1160.

The buckling single membrane 1160 can include metallic material or some other suitable material and can include contact points 1163 affixed to the interior surface 1121 of the annular flange 1120 and discrete segments 1164 between neighboring contact points 1163. Each discrete segment 1164 can be curved radially inwardly for loading up to the designed buckling load and for buckling due to loading at or above the designed buckling load. In accordance with embodiments, each contact point 1163 can be welded to the interior surface 1121 of the annular flange 1120 or otherwise connected thereof via the optional anti-rotation feature 1170. Following buckling of the discrete segments 1164 of the buckling single membrane 1160, the buckling single membrane 1160 remains buckled.

Technical effects and benefits of the present disclosure are the provision of a snap-through buckling-based frangible bearing support that uses an innovative snap-through buckling design to provide frangible bearing support. This provides for an engine architecture in which at least the second bearing support for the second bearing can be broken due to buckling. This, can provide for easier designing for increased lifespan and limiting loading.

The corresponding structures, materials, acts and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the technical concepts in the form disclosed. Many modifications and variations will be apparent to those of ordinary skill in the art without departing from the scope and spirit of the disclosure. The embodiments were chosen and described in order to best explain the principles of the disclosure and the practical application and to enable others of ordinary skill in the art to understand the disclosure for various embodiments with various modifications as are suited to the particular use contemplated.

While the preferred embodiments to the disclosure have been described, it will be understood that those skilled in the art, both now and in the future, may make various improvements and enhancements which fall within the scope of the claims which follow. These claims should be construed to maintain the proper protection for the disclosure first described.

## Claims

1. A snap-through buckling bearing support assembly (401) for mitigating imbalance in an engine (10) due to a fan blade off (FBO) event, the snap-through buckling bearing support assembly (401) comprising:
an annular flange (420) fixed to a casing (410) of the engine (10);
spokes (430) extending radially inwardly from the annular flange (420);
an annular bearing element (440); and
a buckling membrane (460) attached to respective interior ends (431) of each of the spokes (430) to radially restrain the annular bearing element (440) against loading up to a designed buckling load, which is less than or equal to loading of the FBO event, and to buckle under loading beyond the designed buckling load.

2. The snap-through buckling bearing support assembly (401) according to claim 1, wherein, following buckling of the buckling membrane (460), the buckling membrane (460) remains buckled and the spokes (430) act as bumpers for radially restraining the annular bearing element (440).

3. The snap-through buckling bearing support assembly (401) according to claim 1 or 2, wherein the buckling membrane (460) comprises metallic material.

4. The snap-through buckling bearing support assembly (401) according to claim 1, 2 or 3, wherein the buckling membrane (460) comprises discrete segments (461) between neighboring spokes (430), each discrete segment (461) being curved radially inwardly for loading up to the designed buckling load.

5. The snap-through buckling bearing support assembly (401) according to claim 4, wherein respective ends of each of the discrete segments (461) are connected to an interior end (431) of a corresponding spoke (430) at a pin joint (601).

6. The snap-through buckling bearing support assembly (401) according to claim 4, wherein respective ends of each of the discrete segments (461) are welded to an interior end (431) of a corresponding spoke (430).

7. The snap-through buckling bearing support assembly (401) according to any preceding claim, wherein:
the annular bearing element (440) comprises a radially outwardly extending flange (801),
each of the spokes (430) comprises forward and aft spokes (802, 803) to axially restrain the radially outwardly extending flange (801), and
the buckling membrane (460) comprises:
a forward buckling membrane (810) attached to the respective interior ends (431) of each of the forward spokes (802); and
an aft buckling membrane (820) attached to the respective interior ends (431) of each of the aft spokes (803).

8. The snap-through buckling bearing support assembly (401) according to claim 7, wherein the forward and aft spokes (802, 803) have alternating spoke attachment points.

9. A snap-through buckling bearing support assembly (1001) for mitigating imbalance in an engine (10) due to a fan blade off (FBO) event, the snap-through buckling bearing support assembly (1001) comprising:
an annular flange (1020) fixed to a casing (410) of the engine (10);
an annular bearing element (1040); and
a buckling double membrane (1060) attached to an interior surface (1021) of the annular flange (1020) to radially restrain the annular bearing element (1040) against loading up to a designed buckling load, which is less than or equal to loading of the FBO event, and to buckle under loading beyond the designed buckling load,
wherein, optionally, the buckling double membrane (1060) comprises metallic material.

10. The snap-through buckling bearing support assembly (1001) according to claim 9, further comprising an anti-rotation feature (1070) to prevent relative rotation between the annular flange (1020) and the buckling double membrane (1060).

11. The snap-through buckling bearing support assembly (1001) according to claim 9 or 10, wherein, following buckling of the buckling double membrane (1060), the buckling double membrane (1060) remains buckled.

12. The snap-through buckling bearing support assembly (1001) according to claim 9, 10 or 11, wherein the buckling double membrane (1060) comprises:
an interior membrane (1061) comprising first contact points (1063) and first discrete segments (1064) between neighboring first contact points (1063), each first discrete segment (1064) being curved radially inwardly for loading up to the designed buckling load; and
an exterior membrane (1062) comprising second contact points (1065) and second discrete segments (1066) between neighboring second contact points (1065), each second discrete segment (1066) being curved radially outwardly and affixed to the interior surface (1021) of the annular flange (1020),
each first contact point (1063) being affixed to a corresponding one of the second contact points (1065).

13. The snap-through buckling bearing support assembly (1001) according to claim 12, wherein each second discrete segment (1066) is welded to the interior surface (1021) of the annular flange (1020) and each first contact point (1063) is welded to the corresponding one of the second contact points (1065).

14. A snap-through buckling bearing support assembly (1101) for mitigating imbalance in an engine (10) due to a fan blade off (FBO) event, the snap-through buckling bearing support assembly (1101) comprising:
an annular flange (1120) fixed to a casing (410) of the engine (10);
an annular bearing element (1140); and
a buckling single membrane (1160) attached to an interior surface (1121) of the annular flange (1120) to radially restrain the annular bearing element (1140) against loading up to a designed buckling load, which is less than or equal to loading of the FBO event, and to buckle under loading beyond the designed buckling load,
wherein, optionally:
the assembly further comprises an anti-rotation feature (1170) to prevent relative rotation between the annular flange (1120) and the buckling single membrane (1160); and/or
following buckling of the buckling single membrane (1160), the buckling single membrane (1160) remains buckled; and/or
the buckling single membrane (1160) comprises metallic material.

15. The snap-through buckling bearing support assembly (1101) according to claim 14, wherein the buckling single membrane (1160) comprises:
contact points (1163) affixed to the interior surface (1121) of the annular flange (1120); and
discrete segments (1164) between neighboring contact points (1163), each discrete segment (1164) being curved radially inwardly for loading up to the designed buckling load,
wherein, optionally, each contact point (1163) is welded to the interior surface (1121) of the annular flange (1120).
